# EUROPEAN PATENT SPECIFICATION

(11) **EP 2 797 093 B1**
(45) Date of publication and mention of the grant of the patent: **18.05.2016**
(21) Application number: 14163179.6
(22) Date of filing: 02.04.2014
(51) Int. Cl.: H01F 38/14, H02J 7/00

(54) **Slidable charging transmitter position adjusting structure of wireless charging device**
Verschiebbare Ladesenderpositionsanpassungsstruktur einer drahtlosen Ladevorrichtung
Structure de réglage de position d'émetteur de chargement coulissant d'un dispositif de charge sans fil

(30) Priority: 22.04.2013 TW 102207314
(43) Date of publication of application: 29.10.2014
(73) Proprietor: Formosa Electronic Industries Inc., New Taipei City 231 (TW)
(72) Inventor: Wu, Michael, New Taipei City 231 (TW); Wu, Dale, New Taipei City 231 (TW); Wu, Clark, New Taipei City 231 (TW)
(74) Representative: Karakatsanis, Georgios

(56) References cited:
- US-A1- 2010 156 345
- US-A1- 2011 006 611
- US-A1- 2012 119 708
- US-A1- 2012 326 659

## Description

### FIELD OF THE INVENTION

The present invention relates to a wireless charging device, and in particular to a slidable charging transmitter position adjusting structure of wireless charging device for wirelessly charging a portable electronic product.

### DESCRIPTION OF THE PRIOR ART

The advance and progress of electronic science and telecommunication technology make portable electronic products, such as smart phones, tablet computers, digital cameras, and personal digital assistants (PDAs), prevailing and popular in the modern society. Taking the smart phones as an example, the outside appearance of the overall configuration is made thin and compact and light-weighted and, besides conversation, photographing, and medium playing, additional functions, such as wireless network connection and website browsing, are also included. Further, easy and conventional operations are realized with touch screens.

Portable electronic products, such as the smart phones having the above described functions, are surely of high prices and may be even more expensive than traditional notebook computers. To provide protection to such expensive portable electronic products, such as smart phones, from accident falling and getting damaged, a protective cover is often mounted to a back side of the smart device to suppress or even eliminate any potential risk of damage caused by falling.

However, such a multifunctional portable electronic product, due to the powerful functions thereof, requires a greater supply of electrical power, leading to a great increase of power consumption. Users often need to charge batteries built in the portable electronic product from time to time, or alternatively, two battery sets are alternately used in order to suit the need of high power requirement of the portable electronic product. Alternately using battery sets surely adds troubles and burdens to the users in using the portable electronic product and may suppress the users' intention of using the portable electronic product.

To cope with such problems, wireless charging technology has been recently developed, which changes the conventional way that a wired or cabled charger is used to charge a portable electronic product. For example, Taiwan Patent Publication No. 445804 discloses a wireless charging device. However, the known wireless charging device has a transmission coil that is fixed in a base and the position that the transmission coil is mounted in the base is generally fixed and not variable to suit various needs of charging. Particularly, the numbers of suppliers and modes of portable electronic devices that are available in the market are great and not all the electronic devices are provided with induction coils that are set at the middle of the electronic devices. Thus, when a user places a portable electronic product on a wireless charging device for charging, it often occurs that the induction coil and the transmission coil do not match each other in position, making it impossible for the induction coil to correctly receive the electromagnetic signals transmitting from the transmission coil and thus affecting the charging performance of the portable electronic device.

Further attention is drawn to document US 2012/0119708 A1 which shows the features of the preamble of claims 1 and 6.

### SUMMARY OF THE INVENTION

Thus, in view of the drawbacks of the conventional wireless charging device, a primary object of the present invention is to provide a slidable charging transmitter position adjusting structure of wireless charging device for charging a built-in battery of a portable electronic product and for adjusting a charging position of the wireless charging transmitter through an easy push-to-move operation.

The technical solution that the present invention adopts to overcome the problems of the conventional devices is to allow for position adjustment of a transmission coil through a push section of a slide so as to work with any specifications of portable electronic devices for charging.

The present invention provides a slidable charging transmitter position adjusting structure of wireless charging device, which comprises at least one through slot formed in a selected position of a cover or a base of a wireless charging device to extend in a push direction, and at least one guide section formed on a bottom plate. A slidable seat comprises a push section and counterpart guide structures. The slidable seat is slidably coupled to the guide section of the base through the counterpart guide structures so that the push section is operable by means of pushing to have the slidable seat moving in the receiving space of the base in the push direction.

The transmission coil has a circumference along which a circuit board is arranged. The circuit board comprises a plurality of light emission elements mounted thereon. The light emission elements are circumferentially arranged along the circumference of the transmission coil. The light emission elements are electrically connected by a conductive wire to the control element.

The guide section has a structure that comprises a guide rail formed on the bottom plate of the base and a corresponding slide groove. The guide rail and the corresponding slide groove can be alternatively formed on the cover. The guide section can alternatively be a pair of parallel guide rails that are spaced from each other by a distance and the slidable seat is supported between the two parallel guide rails.

### BRIEF DESCRIPTION OF THE DRAWINGS

The present invention will be apparent to those skilled in the art by reading the following description of preferred embodiments of the present invention, with reference to the attached drawings, in which:
Figure 1 is a perspective view showing a first embodiment of the present invention;
Figure 2 is an exploded view showing the first embodiment of the present invention;
Figure 3 is a cross-sectional view taken along line 3-3 of Figure 1;
Figure 4 is a schematic view showing a slidable seat is adjusted to a first position to carry out a charging operation;
Figure 5 is a schematic view showing a slidable seat is adjusted to a second position to carry out a charging operation;
Figure 6 is a schematic view showing a slidable seat is adjusted to a third position to carry out a charging operation;
Figure 7 is a schematic view showing a second embodiment of the present invention; and
Figure 8 is a schematic a third embodiment of the present invention.

### DETAILED DESCRIPTION OF THE PREFERRED EMBODIMENTS

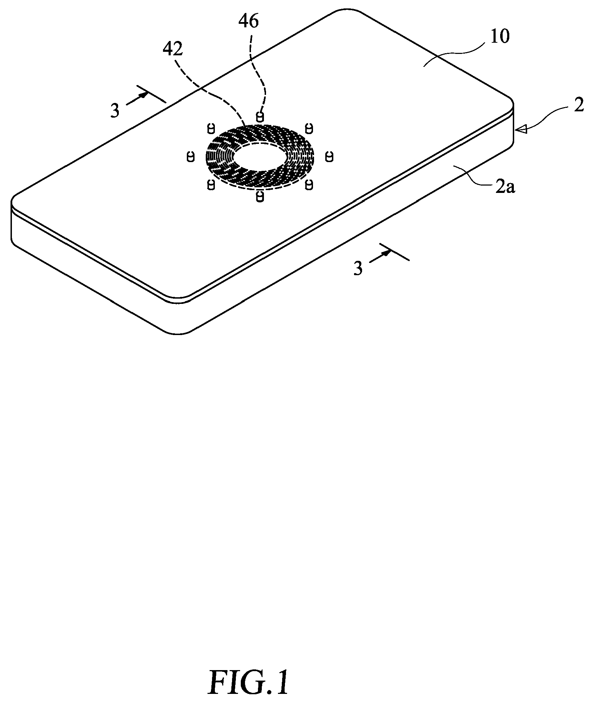

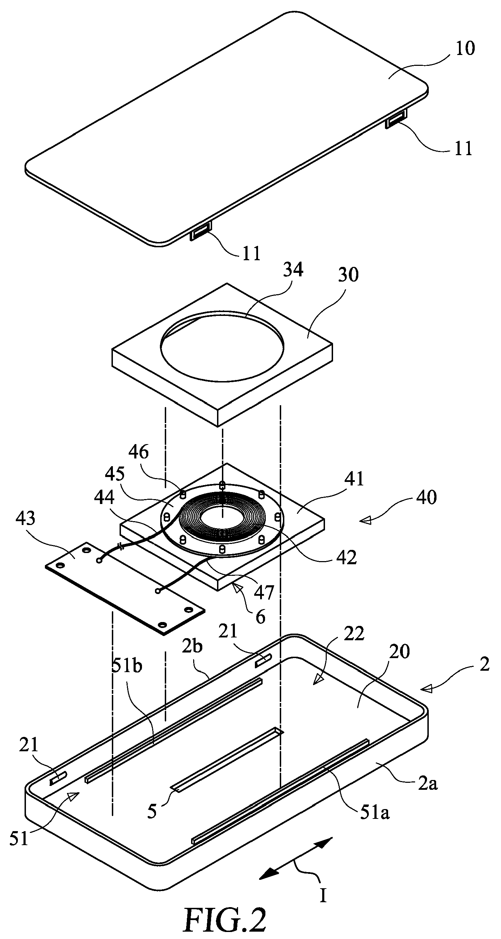

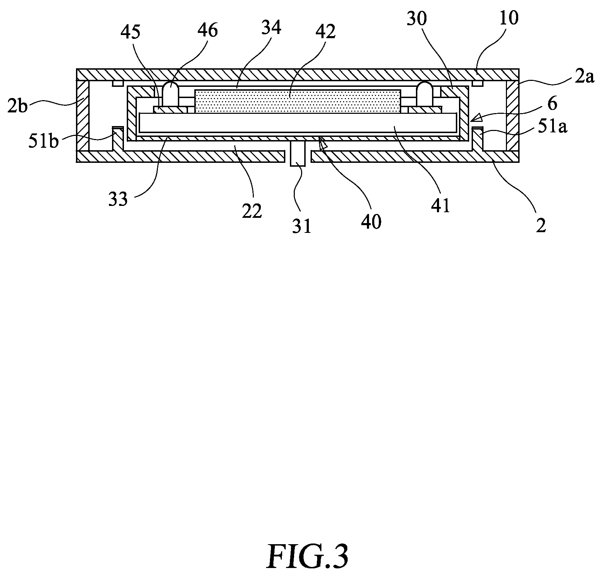

With reference to the drawings and in particular to Figures 1 and 2, which are respectively a perspective view and an exploded view of a first embodiment of the present invention and Figure 3 being a cross-sectional view taken along line 3-3 of Figure 1, as shown in the drawings, the present invention comprises a cover 10 and a base 2 mating each other. The cover 10 has a side edge on which at least on a fastening element 11 is formed. The base 2 has a corresponding side edge on which a corresponding projection 21 is formed. With the fastening element 11 engaging and coupled to the projection 21, the cover 10 is mounted to the base 2 in such a way that the cover 10 and the base 2 define therebetween a receiving space 22.

The base 2 comprises a bottom plate 20. A slidable seat 30 is received in the receiving space 22 defined between the cover 10 and the base 2. The slidable seat 30 forms an interior space 33 therein. The slidable seat 30 has a top in which an opening 34 is formed.

The interior space 33 of the slidable seat 30 receives and retains therein a charging transmitter module 40. The charging transmitter module 40 comprises a permeable plate 41, a transmission coil 42, and a control element 43, wherein the transmission coil 42 is mounted on the permeable plate 41 and is electrically connected via a conductive wire 44 to the control element 43. The transmission coil 42 is exposed through the opening 34 of the top of the slidable seat 30 to oppose the cover 10.

The bottom plate 20 of the base 2 comprises at least one through slot 5 formed in a location corresponding to the slidable seat 30 and extending in a push direction I and at least one guide section 51 formed on the bottom plate. For example, the guide section 51 may comprise a pair of parallel guide rails 51a, 51b that are spaced from each other and extend in the push direction I.

The slidable seat 30 comprises a push section 31 that is formed at a location corresponding to the through slot 5. The push section 3 is arranged to extend through and outside the through slot 5 of the bottom plate 20. In a preferred embodiment, the through slot 5 may be formed in an inwardly recessed portion of the bottom plate 20 so that the push section 31, when extending outside the through slot 5 of the bottom plate 20, does not project beyond a bottom surface of the bottom plate 20.

The slidable seat 30 is slidably supported on the two parallel guide rails 51a, 51b and is operable to slide along the parallel guide rails 51a, 51b. In other words, in the instant embodiment, the slidable seat 30 has opposite side surfaces that can serve as counterpart guide structures 6 mating the parallel guide rails 51a, 51b so that when the push section 31 is operated and pushed to move by a user, the slidable seat 30 is allowed to move, within the receiving space 22 of the base 2, along the push direction I to reach a proper location.

A circuit board 45 is arranged around a circumference of the transmission coil 42. The circuit board 45 comprises a plurality of circumferentially arranged light emission elements 46 mounted thereon. The light emission elements 46 are thus circumferentially arranged along the circumference of the transmission coil 42. The light emission elements 46 are electrically connected, via a conductive wire 47, to the control element 43.

With such an assembly, the control element 43 supplies required electrical power through the conductive wire 44 to the transmission coil 42 so that the transmission coil 42 may generate an electromagnetic signal. A portable electronic device to be charged can be positioned on a top of the cover 10 and an induction coil arranged inside the portable electronic device receives the electromagnetic signal generated by and emitting from the transmission coil 42, which after being subjected to conversion, is applied to carry out electrical charging to a battery received in the portable electronic device.

To carry out charging to portable electronic devices of various specifications, the transmission coil is movable, through positional adjustment of the slidable seat 30, to a desired location to carry out the charging operation.

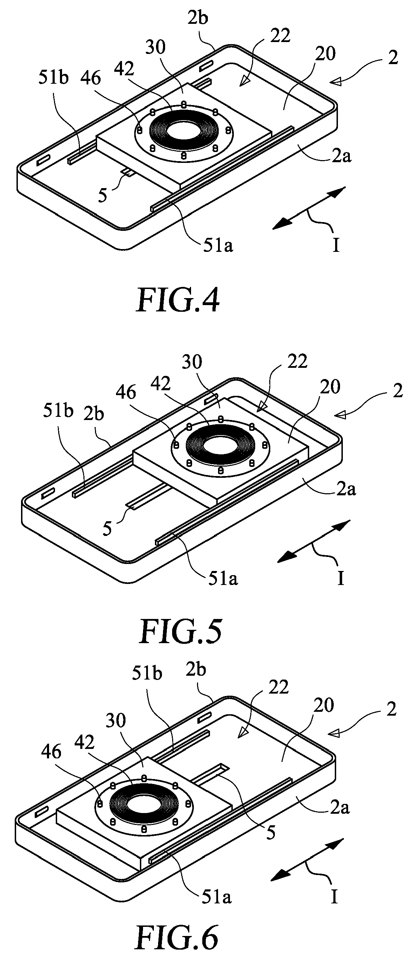

Referring to Figures 4-6, which are schematic views respectively illustrating the slidable seat being adjusted to be located at first, second, and third positions for carrying out charging operations. As shown in the drawings, through adjusting and moving the slidable seat 30, the present invention allows the transmission coil 42 to be set at a desired position for charging according to the requirement of the portable electronic device to be charged so as to allow the induction coil arranged in the portable electronic device to be located at a position corresponding to the transmission coil 42, thereby preventing low or poor charging efficiency resulting from a relatively far distance between the induction coil and the transmission coil 42.

Further, to allow a user to observe a correct position of the transmission coil 42, the cover 10 of the present invention is preferably made of a transparent or translucent material so that the location of the transmission coil 42 under the cover 10 can be readily identified by the user by watching through the cover 10. Further, with the arrangement of the light emission elements 46, when the wireless charging device of the present invention is put into operation, the light emission elements 46 are controlled by the control element 43 to generate flashing or lighting for indicating the position of the transmission coil 42 and reminding the user that the wireless charging device is in operation. After the charging operation is completed, the light emission elements 46 may also provide an indication, such as flashing in a different way, to notify the user of the completion of the charging operation, ensuring easy use and operation for the user.

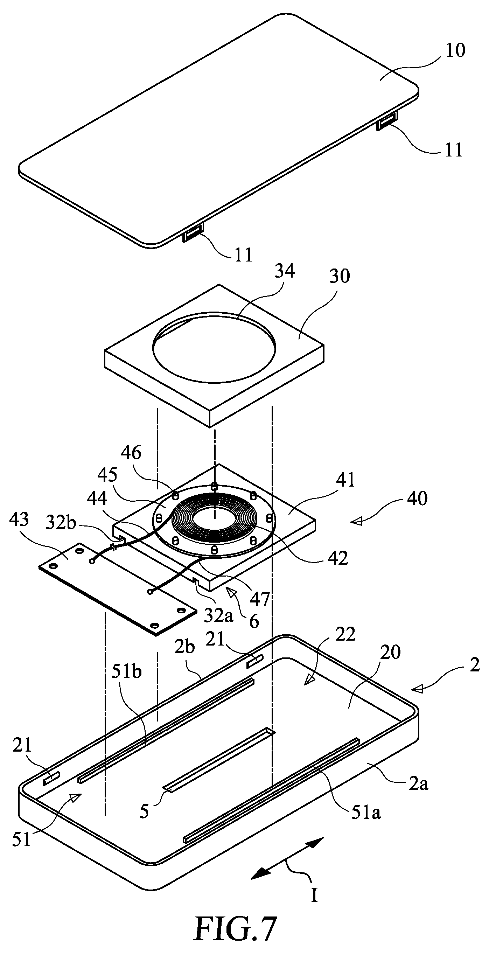

Figure 7 is a schematic view showing a second embodiment of the present invention. The instant embodiment is identical to the previous embodiment for most the structures thereof and a difference resides in that the guide section 51 and the counterpart guide structure 6 of the previous embodiment are subjected to equivalent structural modification in various ways. For example, the slidable seat 30 comprises slide grooves 32a, 32b formed therein at locations corresponding to the guide rails 51a, 51b so that the slide grooves 32a, 32b are slidably and respectively supported on the guide rails 51a, 51b, allowing the slidable seat 30 to be operated to move along the guide rails 51a, 51b.

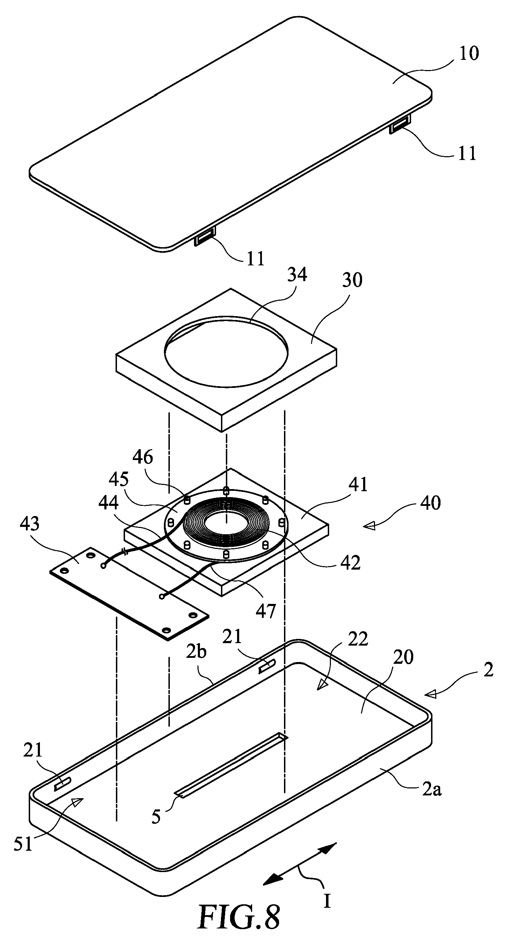

Figure 8 is a schematic view showing a third embodiment of the present invention. The instant embodiment is identical to the previous embodiments for most the structures thereof and a difference resides in that the instant embodiment uses two opposite side walls 2a, 2b of the base 2 as the guide section 51 described in the first embodiment. The slidable seat 30 is slidably supported between the two opposite side walls 2a, 2b of the base 2. This similarly allows a user to operate and push the push section 31 to achieve adjustment of the charging position of the charging transmitter module 40.

To this point, it can be seen that the slidable charging transmitter position adjusting structure of wireless charging device according to the present invention uses the mated combination of a slidable seat and a bottom plate to allow a transmission coil carried on the slidable seat to be set, through proper adjustment, at any necessary position to carry out a charging operation so that charging can be correctly performed on portable electronic devices of various forms and specifications.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A slidable charging transmitter position adjusting structure for a wireless charging device, comprising:
a cover (10);
a base (2), wherein the cover (10) is mounted on the base (2) so that the cover (10) and the base (2) define therebetween a receiving space (22), the base (2) comprising a bottom plate (20);
a slidable seat (30), which is slidably received in the receiving space (22); and
a charging transmitter module (40), which comprises a permeable plate (41) and a transmission coil (42), wherein the transmission coil (42) is mounted on the permeable plate (41), the permeable plate (41) and the transmission coil (42) being mounted in the slidable seat (30) with the transmission coil (42) facing the cover (10);
**characterized in that**
the bottom plate (20) of the base (2) comprises at least one through slot (5) formed in a location corresponding to the slidable seat (30) and extending in a push direction (I) and at least one guide section (51) formed on the bottom plate (20); and
the slidable seat (30) comprises a push section (31) that is formed at a location corresponding to the through slot (5) and at least a pair of counterpart guide structures (6) formed at locations corresponding to the guide section (51), the slidable seat (30) being slidably coupled to the guide section (51) of the base (2) through the counterpart guide structures (6), the push section (31) being operable by means of pushing to have the slidable seat (30) moving in the receiving space (22) of the base (2) in the push direction (I).

2. The slidable charging transmitter position adjusting structure as claimed in Claim 1, wherein the transmission coil (42) has a circumference along which a circuit board (45) is arranged, the circuit board (45) comprising a plurality of light emission elements (46) mounted thereon, the light emission elements (46) being circumferentially arranged along the circumference of the transmission coil (42).

3. The slidable charging transmitter position adjusting structure as claimed in Claim 1, wherein the cover (10) is made of a transparent or translucent material.

4. The slidable charging transmitter position adjusting structure as claimed in Claim 1, wherein the guide section (51) comprises at least one guide rail (51a, 51b) and the counterpart guide structures (6) of the slidable seat (30) comprises a slide groove (32a, 32b), whereby the slidable seat (30) is slidably coupled to the guide rail (51a, 51b) of the base (2) through the slide groove (32a, 32b).

5. The slidable charging transmitter position adjusting structure as claimed in Claim 1, wherein the guide section (51) comprises a pair of parallel guide rails (51a, 51b) that are spaced from each other by a distance, the slidable seat (30) being supported between the two parallel guide rails (51a, 51b) to be operable to slide along the parallel guide rails (51a, 51b).

6. A slidable charging transmitter position adjusting structure for a wireless charging device, comprising:
a cover (10);
a base (2), wherein the cover (10) is mounted on the base (2) so that the cover (10) and the base (2) define therebetween a receiving space (22), the base (2) comprising a bottom plate (20) and two opposite side walls (2a, 2b);
a slidable seat (30), which is slidably received in the receiving space (22); and
a charging transmitter module (40), which comprises a permeable plate (41) and a transmission coil (42), wherein the transmission coil (42) is mounted on the permeable plate (41), the permeable plate (41) and the transmission coil (42) being mounted in the slidable seat (30) with the transmission coil (42) facing the cover (10);
**characterized in that**
the bottom plate (20) of the base (2) comprises at least one through slot (5) formed in a location corresponding to the slidable seat (30) and extending in a push direction (I); and
the slidable seat (30) comprises a push section (31) that is formed at a location corresponding to the through slot (5), the slidable seat (30) being supported between the two opposite side walls (2a, 2b) of the base (2), the push section (31) being operable by means of pushing to have the slidable seat (30) moving in the receiving space (22) of the base (2) in the push direction (I).

7. The slidable charging transmitter position adjusting structure as claimed in Claim 6, wherein the transmission coil (42) has a circumference along which a circuit board (45) is arranged, the circuit board (45) comprising a plurality of light emission elements (46) mounted thereon, the light emission elements (46) being circumferentially arranged along the circumference of the transmission coil (42).

8. The slidable charging transmitter position adjusting structure as claimed in Claim 6, wherein the cover (10) is made of a transparent or translucent material.

## Patentansprüche

1. Verschiebbare Ladesender-Positionseinstellungsstruktur für ein Drahtlos-Ladegerät, die Folgendes umfasst:
eine Abdeckung (10),
eine Basis (2), wobei die Abdeckung (10) so auf der Basis (2) angebracht ist, dass die Abdeckung (10) und die Basis (2) zwischen denselben einen Aufnahmeraum (22) definieren, wobei die Basis (2) eine Bodenplatte (20) umfasst,
ein verschiebbares Auflager (30), das verschiebbar in dem Aufnahmeraum (22) aufgenommen wird, und
ein Ladesendermodul (40), das eine durchlässige Platte (41) und eine Übertragungsspule (42) umfasst, wobei die Übertragungsspule (42) auf der durchlässigen Platte (41) angebracht ist, die durchlässige Platte (41) und die Übertragungsspule (42) in dem verschiebbaren Auflager (30) angebracht sind, wobei die Übertragungsspule (42) zu der Abdeckung (10) zeigt,
**dadurch gekennzeichnet, dass**
die Bodenplatte (20) der Basis (2) wenigstens einen Durchgangsschlitz (5), der in einer Position geformt ist, die dem verschiebbaren Auflager (30) entspricht und sich in einer Schubrichtung (I) erstreckt, und wenigstens eine Führungssektion (51), die auf der Bodenplatte (20) geformt ist, umfasst und
das verschiebbare Auflager (30) eine Schubsektion (31), die an einer Position geformt ist, die dem Durchgangsschlitz (5) entspricht, und wenigstens ein Paar von Gegenstück-Führungsstrukturen (6), die an Positionen geformt sind, die der Führungssektion (51) entsprechen, umfasst, wobei das verschiebbare Auflager (30) durch die Gegenstück-Führungsstrukturen (6) verschiebbar an die Führungssektion (51) der Basis (2) gekoppelt ist, wobei die Schubsektion (31) mit Hilfe von Schieben bedienbar ist, um das verschiebbare Auflager (30) sich in dem Aufnahmeraum (22) der Basis (2) in der Schubrichtung (I) bewegen zu lassen.

2. Verschiebbare Ladesender-Positionseinstellungsstruktur nach Anspruch 1, wobei die Übertragungsspule (42) einen Umfang hat, entlang dessen eine Leiterplatte (45) angeordnet ist, wobei die Leiterplatte (45) mehrere auf derselben angebrachte Lichtemissionselemente (46) umfasst, wobei die Lichtemissionselemente (46) entlang des Umfangs der Übertragungsspule (42) angeordnet sind.

3. Verschiebbare Ladesender-Positionseinstellungsstruktur nach Anspruch 1, wobei die Abdeckung (10) aus einem durchsichtigen oder durchscheinenden Werkstoff hergestellt ist.

4. Verschiebbare Ladesender-Positionseinstellungsstruktur nach Anspruch 1, wobei die Führungssektion (51) wenigstens eine Führungsschiene (51a, 51b) umfasst und die Gegenstück-Führungsstrukturen (6) des verschiebbaren Auflagers (30) eine Gleitrille (32a, 32b) umfasst, wodurch das verschiebbare Auflager (30) durch die Gleitrille (32a, 32b) verschiebbar an die Führungsschiene (51a, 51b) der Basis (2) gekoppelt ist.

5. Verschiebbare Ladesender-Positionseinstellungsstruktur nach Anspruch 1, wobei die Führungssektion (51) ein Paar von parallelen Führungsschienen (51a, 51b) umfasst, die durch eine Entfernung voneinander beabstandet sind, wobei das verschiebbare Auflager (30) zwischen den zwei parallelen Führungsschienen (51a, 51b) gestützt wird, um bedienbar zu sein, um sich entlang der parallelen Führungsschienen (51a, 51b) zu verschieben.

6. Verschiebbare Ladesender-Positionseinstellungsstruktur für ein Drahtlos-Ladegerät, die Folgendes umfasst:
eine Abdeckung (10),
eine Basis (2), wobei die Abdeckung (10) so auf der Basis (2) angebracht ist, dass die Abdeckung (10) und die Basis (2) zwischen denselben einen Aufnahmeraum (22) definieren, wobei die Basis (2) eine Bodenplatte (20) und zwei gegenüberliegende Seitenwände (2a, 2b) umfasst,
ein verschiebbares Auflager (30), das verschiebbar in dem Aufnahmeraum (22) aufgenommen wird, und
ein Ladesendermodul (40), das eine durchlässige Platte (41) und eine Übertragungsspule (42) umfasst, wobei die Übertragungsspule (42) auf der durchlässigen Platte (41) angebracht ist, die durchlässige Platte (41) und die Übertragungsspule (42) in dem verschiebbaren Auflager (30) angebracht sind, wobei die Übertragungsspule (42) zu der Abdeckung (10) zeigt,
**dadurch gekennzeichnet, dass**
die Bodenplatte (20) der Basis (2) wenigstens einen Durchgangsschlitz (5), der in einer Position geformt ist, die dem verschiebbaren Auflager (30) entspricht und sich in einer Schubrichtung (I) erstreckt, umfasst und
das verschiebbare Auflager (30) eine Schubsektion (31) umfasst, die an einer Position geformt ist, die dem Durchgangsschlitz (5) entspricht, wobei das verschiebbare Auflager (30) zwischen den zwei gegenüberliegenden Seitenwände (2a, 2b) der Basis (2) gestützt wird, wobei die Schubsektion (31) mit Hilfe von Schieben bedienbar ist, um das verschiebbare Auflager (30) sich in dem Aufnahmeraum (22) der Basis (2) in der Schubrichtung (I) bewegen zu lassen.

7. Verschiebbare Ladesender-Positionseinstellungsstruktur nach Anspruch 6, wobei die Übertragungsspule (42) einen Umfang hat, entlang dessen eine Leiterplatte (45) angeordnet ist, wobei die Leiterplatte (45) mehrere auf derselben angebrachte Lichtemissionselemente (46) umfasst, wobei die Lichtemissionselemente (46) entlang des Umfangs der Übertragungsspule (42) angeordnet sind.

8. Verschiebbare Ladesender-Positionseinstellungsstruktur nach Anspruch 6, wobei die Abdeckung (10) aus einem durchsichtigen oder durchscheinenden Werkstoff hergestellt ist.

## Revendications

1. Structure de réglage de position de transmetteur de chargement coulissant pour dispositif de chargement sans fil, comprenant :
un recouvrement (10) ;
une base (2), le recouvrement (10) étant monté sur la base (2) de manière à ce que le recouvrement (10) et la base (2) définissent entre eux un espace de réception (22), la base (2) comprenant une plaque de fond (20) ;
un siège coulissant (30), qui est reçu de manière coulissante dans l'espace de réception (22) ; et
un module transmetteur de chargement (40), qui comporte une plaque perméable (41) et une bobine de transmission (42), la bobine de transmission (42) étant montée sur la plaque perméable (41), la plaque perméable (41) et la bobine de transmission (42) étant montées dans le siège coulissant (30) avec la bobine de transmission (42) tournée vers le recouvrement (10) ;
**caractérisée en ce que**
la plaque de fond (20) de la base (2) comprend au moins une fente traversante (5) formée à un endroit correspondant (30) et s'étendant dans un sens de poussée (I) et au moins une section de guidage (51) formée sur la plaque de fond (20) ; et
le siège coulissant (30) comprend une section de poussée (31) qui est formée à un endroit correspondant à la fente traversante (5) et au moins une paire de structures de guidage conjuguées (6) formées à des endroits correspondant à la section de guidage (51), le siège coulissant (30) étant couplé de manière à pouvoir coulisser à la section de guidage (51) de la base (2) par les structures de guidage conjuguées (6), la section de poussée (31) étant actionnable par poussée pour amener le siège coulissant (30) à se déplacer dans l'espace de réception (22) de la base (2) dans le sens de poussée (I).

2. Structure de réglage de position de transmetteur de chargement coulissant selon la revendication 1, dans laquelle la bobine de transmission (42) a une circonférence le long de laquelle un circuit imprimé (45) est disposé, le circuit imprimé (45) comprenant une pluralité d'éléments électroluminescents (46) montés dessus, les éléments électroluminescents (46) étant disposés circonférentiellement le long de la circonférence de la bobine de transmission (42).

3. Structure de réglage de position de transmetteur de chargement coulissant selon la revendication 1, dans laquelle le recouvrement (10) est fait d'un matériau transparent ou translucide.

4. Structure de réglage de position de transmetteur de chargement coulissant selon la revendication 1, dans lequel la section de guidage (51) comprend au moins un rail de guidage (51a, 51b) et les structures de guidage conjuguées (6) du siège coulissant (30) comprennent une gorge de coulissement (32a, 32b), le siège coulissant (30) étant couplée de manière à pouvoir coulisser au rail de guidage (51a, 51b) de la base (2) par la gorge de coulissement (32a, 32b).

5. Structure de réglage de position de transmetteur de chargement coulissant selon la revendication 1, dans laquelle la section de guidage (51) comprend une paire de rails de guidage parallèles (51a, 51b) qui sont mutuellement espacés d'une distance, le siège coulissant (30) étant supporté entre les deux rails de guidage parallèles (51a, 51b) pour être actionnable de manière à coulisser le long des rails de guidage parallèles (51a, 51b).

6. Structure de réglage de position de transmetteur de chargement coulissant pour dispositif de chargement sans fil, comprenant :
un recouvrement (10) ;
une base (2), le recouvrement (10) étant monté sur la base (2) de manière à ce que le recouvrement (10) et la base (2) définissent entre eux un espace de réception (22), la base (2) comprenant une plaque de fond (20) et deux parois latérales opposées (2a, 2b) ;
un siège coulissant (30), qui est reçu de manière à pouvoir coulisser dans l'espace de réception(22) ; et
un module transmetteur de chargement (40), qui comporte une plaque perméable (41) et une bobine de transmission (42), la bobine de transmission (42) étant montée sur la plaque perméable (41), la plaque perméable (41) et la bobine de transmission (42) étant montées sur le siège coulissant (30) avec la bobine de transmission (42) tournée vers le recouvrement (10) ;
**caractérisée en ce que**
la plaque de fond (20) de la base (2) comprend au moins une fente traversante (5) formée dans un endroit correspondant au siège coulissant (30) et s'étendant dans un sens de poussée (I) ;et
le siège coulissant (30) comprend une section de de poussée (31) qui est formée à un endroit correspondant à la fente traversante (5), le siège coulissant (30) étant supporté entre les deux parois latérales opposées (2a, 2b) de la base (2), la section de poussée (31) étant actionnable par poussée pour amener le siège coulissant (30) à se déplacer dans l'espace de réception (22) de la base (2) dans le sens de poussée (I).

7. Structure de réglage de position de transmetteur de chargement coulissant selon la revendication 6, dans laquelle la bobine de transmission (42) a une circonférence le long de laquelle un circuit imprimé (45) est disposé, le circuit imprimé (45) comprenant une pluralité d'éléments électroluminescents (46) montés dessus, les éléments électroluminescents (46) étant disposés circonférentiellement le long de la circonférence de la bobine de transmission (42).

8. Structure de réglage de position de transmetteur de chargement coulissant selon la revendication 6, dans laquelle le recouvrement (10) est fait d'un matériau transparent ou translucide.
